# EUROPÄISCHE PATENTSCHRIFT

(11) **EP 1 149 856 B1**
(45) Veröffentlichungstag und Bekanntmachung des Hinweises auf die Patenterteilung: **08.06.2005**
(21) Anmeldenummer: 00109302.0
(22) Anmeldetag: 29.04.2000
(51) Int. Cl.: C08J 7/04, C08G 18/69, C09D 175/04, C09D 183/06

(54) **Verwendung als Voranstrich**
Use as a primer
Utilisation comme primaire

(43) Veröffentlichungstag der Anmeldung: 31.10.2001
(73) Patentinhaber: Sika Schweiz AG, 8064 Zürich (CH)
(72) Erfinder: Merz, Peter W., 8832 Wollerau (CH); Tsuno, Shingo, Chigasaki 253-0013 Japan (JP)
(74) Vertreter: Isler, Jörg

(56) Entgegenhaltungen:
- EP-A- 0 262 472
- EP-A- 0 430 421
- EP-A- 0 517 471
- JP-A- 6 016 999

## Beschreibung

Die vorliegende Erfindung betrifft neue Voranstriche für die Haftungsverbesserung von schwer zu verklebenden Kunststoffen, insbesondere von polyolefinischen Thermoplasten, mit ein- oder zweikomponentigen Klebstoffsystemen.

Voranstriche, auch als Primer, Aktivator oder Haftvermittler bezeichnet, kommen überall dort zur Anwendung, wo der eingesetzte Klebstoff keine oder nur eine beschränkte Haftung zum Substrat bzw. Untergrund erzielt. Dabei ist das Klebstoffsystem, bestehend aus der Vorbehandlung und dem Klebstoff, aufeinander und auf das Substrat abgestimmt. Solche Voranstriche können physikalisch verfestigend oder chemisch vernetzbar sein. Vorbehandlungssysteme von Kunststoffen, wie z.B. Polypropylen, Polyethylen, EPDM (Ethylen/Propylen-Dien-Terpolymere), Polyamid, ABS (Acrylnitril-Butadien-Styrol-Copolymere) etc. oder kratzfeste Kunststoffe, wie z.B. mit Polydimethylsiloxan beschichtetes Polycarbonat, sind bekannt und in Patentschriften beschrieben.

Gemäss EP 0409198 muss das Polyolefin nach der Applikation eines Haftvermittlers, welcher silylfunktionalisierte Fumarate enthält, angeschmolzen werden.

In WO 92/09669 werden Polyolefin-Primer offenbart, welche Ethylendiamin-Derivate enthalten und insbesondere für Cyanoacrylat-Klebstoffe geeignet sind.

EP 0295930 beschreibt einen Primer für Cynaoacrylat-Klebstoffe, der Diazobicyclo- oder Triazabicyclo Verbindungen enthält. Dieser Primer bildet keinen Film aus und führt demzufolge nur zu einer kleinen Haftungsverbesserung; ferner ist dieser Primer für im Vergleich zu Cyanoacrylat-Klebstoffen weniger starre Klebstoffe ungeeignet.

In EP 0703285 wird als Primer für Polyolefine eine Mischung bestehend aus chloriertem Polyolefin und flexibilisiertem Epoxidharz offenbart. Da dieser Primer nicht vernetzt, ist die Wärmebeständigkeit ungenügend. Ebenfalls zeigt das Epoxidharz eine schlechte Affinität zu Polyolefinen. Ferner ist das Vorhandensein von Chlor wegen gesetzlicher Regulierungen kritisch.

In den Patentschriften JP 3239761 bzw. JP 62095326 werden Reaktionsprodukte aus hydriertem Polybutadiendiol mit Polyisocyanat beschrieben. Jedoch beeinträchtigt die schlechte Löslichkeit des hydrierten Polybutadien-diols in einem Lösungsmittel die Produktivität und aufgrund von Separationen oder Gelierungen die Lagerstabilität.

EP-A 0 430 421 beschreibt eine hitzehärtende Zusammensetzung, welche ein blockiertes Polyurethan, einen Vernetzer sowie ein Silikonöl umfasst. Das blockierte Polyurethan wird aus einem Hydoxyl-funktionellem hydrierten Polydien oder Polyolefin-Zwischenprodukt, Polyisocyanat und einem Blockierungsmittel hergestellt.

Es ist das Ziel der vorliegenden Erfindung, eine neue Verwendung, namentlich als Voranstriche für die Haftverbesserung von polyolefinischen Kunststoffen zu Kleb- und Dichtstoffen bereitzustellen, welche die oben beschriebenen Nachteile überwinden.

Dieses Ziel wurde erreicht durch die Verwendung gemäss Anspruch 1. Spezielle Ausführungsformen sind den abhängigen Ansprüchen zu entnehmen.

Als eine erfindungsgemässe Verwendung als Voranstrich kommt ein Prepolymer zum Einsatz, das auf einem mit reaktiven Endgruppen versehenen Polyol basiert, welches aus hydriertem Polyisopren-Diol besteht oder dieses enthält. Bevorzugte reaktive Endgruppen sind Isocyanat- und Silan-Gruppen.

Die reaktiven Endgruppen können allenfalls für spezielle Anwendungen oder zur Erhöhung der Lagerstabilität geschützt sein, so dass sie ihre Reaktivität erst nach erfolgter Entschützung/Deblockierung (z.B. thermisch) erlangen.

Bevorzugte Voranstriche enthalten das Prepolymer zusammen mit einem geeigneten Lösungsmittel.

Der Voranstrich zeigt eine gute Affinität zu apolaren Kunststoffen, insbesondere zu polyolefinischen thermoplastischen Substraten, wie Polyethylen, Polypropylen, PVC, ABS oder EPDM. Er ist aufgrund der chemischen Vernetzung und filmbildenden Charakteristik wärmeresistent, enthält keine Komponenten, welche mit dem Klebstoff eine abbauende Reaktion auslösen und weist eine sehr gute Benetzung verschiedenster Substrate sowie ausgezeichnete Offenliegezeit auf. Ferner ist eine einfache Herstellung eines Lösemittel und Prepolymer enthaltenden Voranstrichs möglich, da sich das auf hydriertem Polyisopren-Diol (=HPIPOL) basierende Prepolymer, sehr gut in einem aromatischen oder nicht aromatischen Lösemittel in hoher Konzentration bei Raumtemperatur auflösen lässt. Dies führt einerseits zu einer verbesserten Produktivität und andererseits aufgrund der guten Verträglichkeit und herabgesetzten Separationsneigung zu einer Verbesserung der Lagerstabilität. Ausserdem erlaubt die gute Löslichkeit des HPIPOLs einen hohen Festanteil im Voranstrich und bewirkt guten homogener Filmcharakter mit guter Haftungsqualität. Schlechter, nicht homogener Filmcharakter mit unterschiedlicher Schichtdicke führt zu einer reduzierten und schlecht reproduzierbaren Haftungsqualität.

Der Voranstrich beruht auf einem feuchtigskeitshärtenden Bindemittel, welches durch Reaktion des HPIPOL (siehe oben) mit einer Verbindung erhalten wird, die mindestens eine OH-reaktive Gruppe und mindestens eine weitere reaktive Gruppe aufweist, wobei die mindestens eine weitere reaktive Gruppe entweder direkt die reaktive Endgruppe des Prepolymers darstellt, oder in einer weiteren Stufe zu dieser umgesetzt wird.

Ein bevorzugtes Bindemittel wird durch Reaktion des HPIPOL mit einem Polyisocyanat erhalten, wobei das Verhältnis von OH/NCO zwischen 1 und 10, bevorzugt zwischen 2 und 4 liegt. Entsprechende Verhältnisse sind auch für die Herstellung eines silanterminierten Prepolymers geeignet resp. bevorzugt. Solche Prepolymere werden vorzugsweise in einer Konzentration von 0.5 bis 50 Gew.-%, insbesondere von 5 bis 15 Gew.-% in einem apolaren aliphatischen oder aromatischen Lösemittel, wie z.B. Cyclohexan, Xylol etc. oder in Lösemittelgemische, wie z.B. Ethylacetat und Heptan, aufgenommen.

Als Polyisocyanate kommen 4,4'-Diphenylmethan-diisocyanat (MDI), 2,4-Toluol-diisocyanat, Isophoron-diisocyanat, Hexamethylen-diisocyanat, Tri(phenylisocyanat)thiophosphat, Triphenylmethan-4,4',4''-triisocyanat etc. oder Mischungen derselben in Frage.

Die Umsetzung des Polyols mit dem Polyisocyanat erfolgt in bekannter Weise unter Stickstoff und Rühren bei gegebenenfalls erhöhter Temperatur und gegebenenfalls in Gegenwart eines Katalysators, wobei das Verhältnis OH:NCO zwischen 1:2 bis 1:5, bevorzugt zwischen 1:2.5 bis 1:3.5 liegt. Das Polyol wird vorab in einem Lösemittel homogenisiert.

Die Isocyanatgruppen des Prepolymers können in einem weiteren Schritt entweder mit Amino-Silan oder Mercapto-Silan mindestens teilweise und bevorzugt vollständig in ein mit feuchtigkeitsreaktiven Silangruppen terminiertes Prepolymer oder mit Hydroxyethyl(meth)acrylat in ein Acrylatgruppen terminiertes Prepolymer, dessen Doppelbindungen, z.B. in Gegenwart eines Initiators radikalisch, vernetzen, überführt werden.

Beispielsweise kann HPIPOL mit Isophoron-diisocyanat (IPDI) oder Toluol-diisocyanat (TDI) zu Isocyanat terminiertem Prepolymer umgesetzt werden und dieses Prepolymer - falls gewünscht - anschliessend mit Amino-Silan oder Mercapto-Silan in ein Silangruppen terminiertes Prepolymer übergeführt werden.

Es ist selbstverständlich auch möglich, die Silan-Endgruppe, durch Wahl einer geeigneten Verbindung, direkt einzuführen. Beispielsweise kann HPIPOL mit Isocyanatopropyltrimethoxysilan umgesetzt werden.

Das im erfindungsgemäss verwendeten Prepolymer notwendigerweise anwesende Polyol, HPIPOL, kann mit anderen Polyolen, wie z.B. Polyether, Polyester oder andere Hydroxygruppen funktionalisierte Kohlenwasserstoffen abgemischt werden, wobei der Anteil an HPIPOL mind. 10 Gew.-%, bezogen auf das Gesamtpolyol, betragen sollte, vorzugsweise mind. 40 Gew.-%. Dadurch können die Filmeigenschaften der Voranstriche zu jedem Substrat spezifisch optimal eingestellt werden. Solche Polyol-Mischungen können sowohl durch Mischen der Polyole und anschliessendes Einführen der reaktiven Endgruppen wie auch durch Mischen von Prepolymeren aus unterschiedlichen Polyolen erhalten werden.

Untersuchungen haben gezeigt, dass HPIPOL abgemischt mit z.B. einem hydrierten Polybutadien-diol (H-PBDOL) im Verhältnis 1:0.1 bis 1:3, insbesondere im Verhältnis 1:0.3 bis 1:1 ein optimales Bindemittel resp. einen optimalen Voranstrich hervorbringt. Dabei können in Konflikt stehende Eigenschaften gut ausbalanciert werden. Zum Beispiel ist einerseits eine wirtschaftliche Produktion (kein Aufschmelzen grösserer Mengen von festen Polyolen) und eine gute Lagerstabilität aufgrund geringerer Separationsneigung und andererseits ist eine optimale Offenliegezeit, welche eine gute Benetzung bzw. Oberflächenpenetration des Voranstriches gewährleistet und dennoch eine Trockenfilmbildung in kurzer Zeit erzielt, gegeben.

Voranstriche mit hohem Festanteil von H-PBDOL (z.B. > 10 Gew.-% H-PBDOL/MDI in Xylol) ergeben aufgrund der Separationsneigung während der Trocknungszeit einen nicht homogenen Filmcharakter mit unterschiedlicher Schichtdicke, was zu einer herabgesetzten und unterschiedlichen Haftungsqualität führt.

Die Trockenfilmbildung ist die Voraussetzung für die Applikation entweder, je nach Bedarf, eines weiteren Voranstriches oder des Klebstoffes.

Im folgenden sollen einige Beispiele aufgezeigt werden, die die Erfindung weiter veranschaulichen, den Umfang der Erfindung aber in keiner Weise beschränken sollen (siehe Tabelle unten). Die Voranstriche, erfindungsgemässe Bsp. 1, 2 und 3, sind einfach herstellbar, lagerstabil, besitzen eine gute Haftungsperformance und sind beständig in heiss (70°C) feuchten (rel. Feuchtigkeit 100 %) Bedingungen.

Die Löslichkeit des H-PBDOL/MDI in Referenz 4 und des HPIPOL/MDI (erfindungsgemässes Beispiel 2) ist deutlich unterschiedlich. Währendem H-PBDOL/MDI sich nur in einem aromatischen Lösemittel, nicht aber in einem aliphatischen Lösemittel, wie z.B. einem Gemisch bestehend aus Cyclohexan und Ethylacetat, lösen lässt (führt zu Separationen), kann HPIPOL/MDI problemlos in aromatischen und aliphatschen Lösemittelkombinationen aufgenommen werden.

So lässt sich das aus dem Stand der Technik bekannte H-PBDOL/MDI in einem aromatischen Lösemittel, wie z.B. Xylol, bis maximal 10 Gew.-% gut lösen. Bei > 10 Gew.-% besteht Separationsneigung oder Gelierungsgefahr (Pudding-Bildung, siehe Referenz 2).

Das erfindungsgemäss verwendete Prepolymer HPIPOL/MDI lässt sich bis über 90 Gew.-%, vorzugsweise in einem aromatischen Lösungsmittel, wie z.B. Xylol, lösen. Ebenfalls lässt sich HPIPOL/MDI in Konzentration > 20 Gew.-% in einem aliphatischen Lösemittel, welches bevorzugt ein Gemisch aus Cyclohexan und Ethylacetat ist, lösen. Die Haftungsqualität wird praktisch nicht durch die Art des verwendeten Lösemittels, aromatisch oder aliphatisch, beeinflusst, zumal das Lösemittel nach der Applikation nach kurzer Zeit entweicht.

In der nachfolgenden Tabelle bedeuten OZ = Offenliegezeit und ZSF = Zugscherfertigkeit.

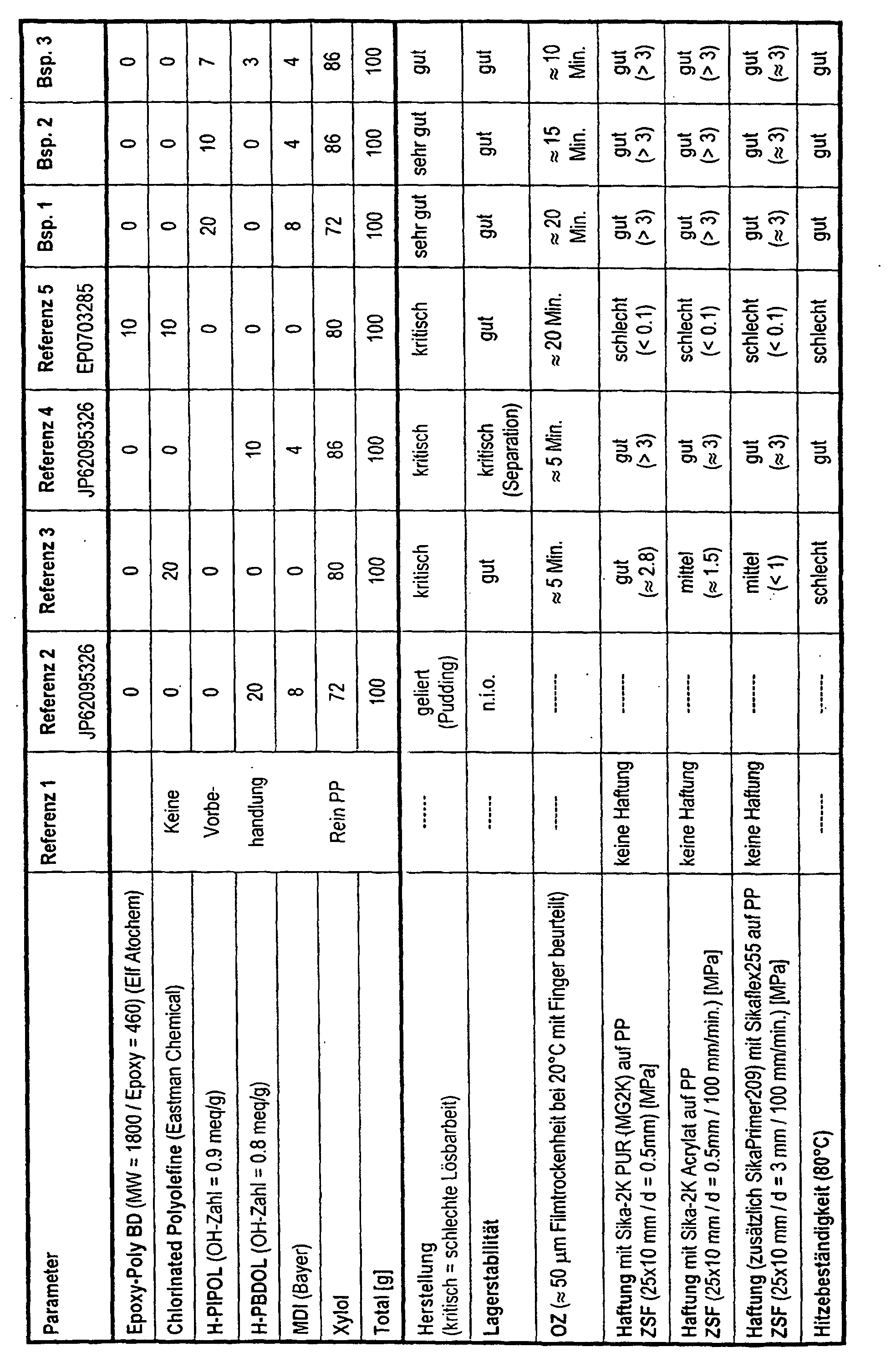

## Patentansprüche

1. Verwendung eines Prepolymers, das ein mit reaktiven Endgruppen versehenes Polyol ist, wobei das Polyol hydriertes Polyisopren-Diol (HPIPOL) ist oder enthält, als Voranstrich zur Verbesserung der Haftung von polyolefinischen Kunststoffen zu Kleb- und Dichtstoffen.

2. Verwendung gemäss Anspruch 1, **dadurch gekennzeichnet, dass** die reaktiven Endgruppen Isocyanatgruppen sind.

3. Verwendung gemäss Anspruch 1 oder 2, **dadurch gekennzeichnet, dass** die reaktiven Endgruppen Silangruppen sind.

4. Verwendung gemäss einem der Ansprüche 1 bis 3, **dadurch gekennzeichnet, dass** das Prepolymer durch Umsetzung von HPIPOL mit einem Polyisocyanat erhalten wurde, wobei das Verhältnis OH/NCO zwischen 1 und 10, vorzugsweise zwischen 2 und 4 liegt.

5. Verwendung gemäss einem der Ansprüche 1 bis 4, **dadurch gekennzeichnet, dass** das Prepolymer durch Umsetzung von HPIPOL mit einem Polyisocyanat erhalten wurde, das ausgewählt ist aus der Gruppe umfassend 4,4-Diphenyl-methan-diisocyanat (MDI), 2,4-Toluol-diisocyanat, Isophoron-diisocyanat, Hexamethylen-diisocyanat, Tri(phenylisocyanat)thiophosphat, Triphenylmethan-4,4',4"-triisocyanat und Mischungen derselben.

6. Verwendung gemäss einem der Ansprüche 1 bis 5, **dadurch gekennzeichnet, dass** das Prepolymer durch Umsetzung eines isocyanatterminierten Prepolymers mit Amino-Silan und/oder Mercapto-Silan erhalten wurden.

7. Verwendung gemäss einem der Ansprüche 1 bis 6, **dadurch gekennzeichnet, dass** das Polyol eine Mischung von HPIPOL mit mindestens einem weiteren Polyol ist, das ausgewählt ist aus der Gruppe umfassend Polyetherpolyol, Polyesterpolyol, mit Hydroxygruppen funktionalisierte Kohlenwasserstoffe und Mischungen derselben.

8. Verwendung gemäss Anspruch 7, **dadurch gekennzeichnet, dass** HPIPOL in einer Menge, bezogen auf das Gewicht des Gesamtpolyols von mind. 10 Gew.-% anwesend ist, vorzugsweise mind. 40 Gew.-%.

9. Verwendung gemäss Anspruch 7 oder 8, **dadurch gekennzeichnet, dass** das mindestens eine weitere Polyol hydriertes Polybutadien-diol ist, insbesondere in Mengen, derart, dass das Verhältnis HPIPOL zu hydriertem Polybutadien-diol von 1:0 bis 1:3, speziell bevorzugt von 1:0.3 bis 1:1 beträgt.

10. Verwendung gemäss einem der Ansprüche 1 bis 8 zusammen mit Lösemitteln, insbesondere apolaren Lösemitteln, die ausgewählt sind aus aromatischen und speziell bevorzugt aliphatischen Kohlenwasserstoffen oder Mischungen derselben.

11. Verwendung gemäß einem der vorangehenden Ansprüche zur Herstellung eines lösemittelhaltigen Voranstrichs.

12. Verwendung gemäss Anspruch 10 oder 11, **dadurch gekennzeichnet, dass** das Prepolymer in Mengen von 0.5 - 50 Gew.-%, insbesondere von 5 bis 15 Gew.-%, bezogen auf das Gewicht des Voranstrichs, eingesetzt wird resp. vorhanden ist.

13. Verfahren zur Vorbehandlung eines Substrats aus einem polyolefinischen Kunststoff, **dadurch gekennzeichnet, dass** man das Substrat mit einem in den vorhergehenden Ansprüchen beschriebenen Voranstrich behandelt, wobei man das Substrat gegebenenfalls erhöhter Temperatur und/oder erhöhter Feuchtigkeit aussetzt und danach einen Klebstoff aufträgt.

14. Verfahren gemäss Anspruch 13, **dadurch gekennzeichnet, dass** die Behandlung durch Tauchen, Sprühen oder Bestreichen erfolgt.

15. Verfahren gemäss Anspruch 13 oder 14, **dadurch gekennzeichnet, dass** das Substrat ein apolarer Kunststoff, insbesondere ein polyolefinisches Thermoplastisches Substrat ist.

16. Verfahren gemäss Anspruch 14, **dadurch gekennzeichnet, dass** das polyolefinische thermoplastische Substrat ausgewählt ist aus der Gruppe umfassend Polyethylen, Polypropylen, Polyvinylchlorid, ABS oder EPDM.

## Claims

1. Use of a prepolymer which is a polyol provided with reactive end groups, the polyol being or comprising hydrogenated polyisoprene-diol (HPIPOL), as a primer for improving the adhesion of polyolefinic plastics to adhesives and sealants.

2. Use according to Claim 1, **characterized in that** the reactive end groups are isocyanate groups.

3. Use according to Claim 1 or 2, **characterized in that** the reactive end groups are silane groups.

4. Use according to one of Claims 1 to 3, **characterized in that** the prepolymer has been obtained by reacting HPIPOL with a polyisocyanate, the OH/NCO ratio being between 1 and 10, preferably between 2 and 4.

5. Use according to one of Claims 1 to 4, **characterized in that** the prepolymer has been obtained by reacting HPIPOL with a polyisocyanate selected from the group consisting of diphenylmethane 4,4-diisocyanate (MDI), toluene 2,4-diisocyanate, isophorone diisocyanate, hexamethylene diisocyanate, tri(phenyl isocyanate) thiophosphate, triphenylmethane 4,4',4''-triisocyanate and mixtures thereof.

6. Use according to one of Claims 1 to 5, **characterized in that** the prepolymer has been obtained by reacting an isocyanate-terminated prepolymer with aminosilane and/or mercaptosilane.

7. Use according to one of Claims 1 to 6, **characterized in that** the polyol is a mixture of HPIPOL with at least one further polyol selected from the group consisting of polyether polyol, polyester polyol, hydroxyl-functionalized hydrocarbons and mixtures thereof.

8. Use according to Claim 7, **characterized in that** HPIPOL is present in an amount, based on the weight of the total polyol, of at least 10%, preferably at least 40%, by weight.

9. Use according to Claim 7 or 8, **characterized in that** the at least one further polyol is hydrogenated polybutadiene-diol, especially in amounts such that the ratio of HPIPOL to hydrogenated polybutadiene-diol is from 1:0 to 1:3, with especial preference from 1:0.3 to 1:1.

10. Use according to one of Claims 1 to 8 together with solvents, especially apolar solvents, which are selected from aromatic and with especial preference aliphatic hydrocarbons or mixtures thereof.

11. Use according to one of the preceding claims for producing a solvent-containing primer.

12. Use according to Claim 10 or 11, **characterized in that** the prepolymer is used or present, respectively, in amounts of 0.5% - 50%, in particular from 5% to 15%, by weight based on the weight of the primer.

13. Method of pretreating a substrate comprising a polyolefinic plastic, **characterized in that** the substrate is treated with a primer described in the preceding claims, the substrate being subjected if desired to elevated temperature and/or elevated moisture, and subsequently an adhesive is applied.

14. Method according to Claim 13, **characterized in that** the treatment takes place by dipping, spraying or spreading.

15. Method according to Claim 13 or 14, **characterized in that** the substrate is an apolar plastic, especially a polyolefinic thermoplastic substrate.

16. Method according to Claim 14, **characterized in that** the polyolefinic thermoplastic substrate is selected from the group consisting of polyethylene, polypropylene, polyvinyl chloride, ABS and EPDM.

## Revendications

1. Utilisation d'un prépolymère, qui est un polyol pourvu de groupements terminaux réactifs, le polyol étant ou contenant un polyisoprènediol (HPIPOL) hydrogéné, en tant que peinture d'apprêt en vue de l'amélioration de l'adhésion de matières synthétiques polyoléfiniques pour former des adhésifs et des agents de scellement.

2. Utilisation selon la revendication 1, **caractérisée en ce que** les groupements terminaux réactifs sont des groupements isocyanate.

3. Utilisation selon la revendication 1 ou 2, **caractérisée en ce que** les groupements terminaux réactifs sont des groupements silane.

4. Utilisation selon l'une quelconque des revendications 1 à 3, **caractérisée en ce que** le prépolymère a été obtenu par réaction du HPIPOL avec un polyisocyanate, le rapport OH/NCO se situant entre 1 et 10, de préférence, entre 2 et 4.

5. Utilisation selon l'une quelconque des revendications 1 à 4, **caractérisée en ce que** le prépolymère a été obtenu par réaction du HPIPOL avec un polyisocyanate, qui est sélectionné parmi le groupe comprenant le diisocyanate de 4,4-diphénylméthane (MDI), le diisocyanate de 2,4-toluène, le diisocyanate d'isophorone, le diisocyanate d'héxaméthylène, le thiophosphate de tri(phénylisocyanate), le triisocyanate de triphénylméthane-4,4',4'' et des mélange de ces derniers.

6. Utilisation selon l'une quelconque des revendications 1 à 5, **caractérisée en ce que** le prépolymère a été obtenu par réaction d'un prépolymère terminé en groupement isocyanate avec un aminosilane et/ou un mercaptosilane.

7. Utilisation selon l'une quelconque des revendications 1 à 6, **caractérisée en ce que** le polyol est un mélange de HPIPOL avec au moins un polyol supplémentaire, qui est sélectionné parmi le groupe comprenant des polyétherpolyols, des polyesterpolyols, des hydrocarbures fonctionnels avec groupements hydroxy et des mélanges de ces derniers.

8. Utilisation selon la revendication 7, **caractérisée en ce que** le HPIPOL est présent dans une quantité, par rapport au poids du polyol total, d'au moins 10% en poids, de préférence, d'au moins 40% en poids.

9. Utilisation selon la revendication 7 ou 8, **caractérisée en ce que** l'au moins un polyol supplémentaire est un polybutadiènediol hydrogéné, en particulier dans des quantités telles que le rapport HPIPOL au polybutadiènediol hydrogéné soit de 1:0 à 1:3, tout spécialement de préférence, de 1:0,3 à 1:1.

10. Utilisation selon l'une quelconque des revendications 1 à 8, conjointement avec des solvants, en particulier avec des solvants apolaires, qui sont sélectionnés parmi des hydrocarbures aromatiques et tout spécialement de préférence, aliphatiques ou des mélanges de ces derniers.

11. Utilisation selon l'une quelconque des revendications précédentes en vue de la fabrication d'une peinture d'apprêt contenant des solvants.

12. Utilisation selon la revendication 10 ou 11, **caractérisée en ce que** le prépolymère est utilisé ou est présent dans des quantités de 0,5 à 50% en poids, en particulier de 5 à 15% en poids, par rapport au poids de la peinture d'apprêt.

13. Procédé en vue du traitement préalable d'un substrat fait à partir d'une matière synthétique polyoléfinique, **caractérisé en ce que** le substrat est traité à l'aide d'une peinture d'apprêt décrite dans les revendications précédentes, le substrat étant exposé, le cas échéant, à une température plus élevée et/ou à une humidité plus élevée et un adhésif étant ensuite appliqué.

14. Procédé selon la revendication 13, **caractérisé en ce que** le traitement se fait par immersion, pulvérisation ou application au pinceau.

15. Procédé selon la revendication 13 ou 14, **caractérisé en ce que** le substrat est une matière synthétique apolaire, en particulier un substrat thermoplastique polyoléfinique.

16. Procédé selon la revendication 14, **caractérisé en ce que** le substrat thermoplastique polyoléfinique est sélectionné parmi le groupe comprenant le polyéthylène, le polypropylène, le chlorure de polyvinyle, l'ABS ou le EPDM.
